(19) Europäisches Patentamt
European Patent Office
Office européen des brevets

(11) EP 4 729 347 A1

(12) DEMANDE DE BREVET EUROPEEN

(43) Date de publication:
22.04.2026 Bulletin 2026/17

(21) Numéro de dépôt: 25209686.2

(22) Date de dépôt: 20.10.2025

(51) Classification Internationale des Brevets (IPC):
B60L 53/62 (2019.01)     B60L 53/63 (2019.01)
B60L 53/66 (2019.01)     B60L 53/67 (2019.01)

(52) Classification Coopérative des Brevets (CPC):
B60L 53/62; B60L 53/63; B60L 53/66; B60L 53/67

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 21.10.2024 FR 2411426

(71) Demandeur: SCHNEIDER ELECTRIC
INDUSTRIES SAS
92500 Rueil-Malmaison (FR)

(72) Inventeur: DE CESARIS, Stefano
92500 RUEIL MALMAISON (FR)

(74) Mandataire: Lavoix
62, rue de Bonnel
69448 Lyon Cedex 03 (FR)

(54) PROCÉDÉ ET SYSTÈME DE RECHARGE ÉLECTRIQUE POUR VÉHICULES ÉLECTRIQUES, LE SYSTÈME COMPORTANT UNE PLURALITÉ DE BORNES DE RECHARGE À ÉNERGIE ÉLECTRIQUE ALTERNATIVE

(57) Le procédé de recharge électrique est mis en œuvre par un système comportant un module de supervision, une pluralité de bornes de recharge, chaque borne de recharge étant configurée pour communiquer avec le module de supervision via une liaison de communication, le procédé comportant une obtention (50), à partir de chaque borne de recharge, d'une représentation spectrale du courant consommé par la borne, une détermination (52) d'une représentation spectrale globale (Sg) du système de recharge à partir des représentations spectrales du courant consommé par borne de recharge et par rang spectral, un calcul (54) d'une valeur de dégradation du facteur de puissance du système de recharge en fonction de la représentation spectrale globale du système de recharge. Un coefficient de déclassement à appliquer (60) par au moins une des bornes de recharge est calculé (56, 57, 58) en utilisant la valeur de dégradation du facteur de puissance calculée.

FIG.4

**Description**

La présente invention concerne un procédé de recharge électrique pour véhicules électriques, et un système de recharge pour véhicules électriques associé, le système comportant une pluralité de bornes de recharge à énergie électrique alternative.

L'invention concerne également une borne de recharge et un module de supervision d'un système de recharge électrique pour véhicules électriques.

L'invention se situe dans le domaine de la recharge électrique des véhicules électriques.

De manière connue, les véhicules électriques sont équipés de batteries rechargeables, qui permettent d'alimenter en énergie électrique leur moteur de traction. Les batteries des véhicules électriques doivent être rechargées à partir d'une source d'énergie électrique, fournissant une énergie électrique alternative ou continue. Par exemple, lorsque la source d'énergie électrique est un réseau de distribution d'électricité, l'énergie électrique fournie est alternative, et fournit un courant électrique alternatif et une tension électrique alternative, sur un nombre donné de phases, par exemple triphasé. Chaque véhicule électrique est équipé d'un convertisseur, dit convertisseur embarqué, d'énergie électrique alternative en énergie électrique continue, ou convertisseur AC-DC (pour « Alternative Current » et « Direct Current » en anglais), pour permettre la recharge de la batterie rechargeable.

Il existe des systèmes de recharge électrique pour véhicules électriques comportant une ou plusieurs borne(s) de recharge à courant alternatif, ou bornes AC, chaque borne étant capable de fournir un courant électrique alternatif à un véhicule électrique qui se connecte, au moyen d'un câble adéquat, sur une telle borne de recharge. Le convertisseur embarqué dans le véhicule électrique est alors mis en œuvre pour effectuer la conversion du courant électrique alternatif en courant électrique continu, et recharger la batterie du véhicule électrique.

Un des problèmes susceptibles de survenir dans un tel système de recharge de véhicules électriques est le phénomène de dégradation du facteur de puissance, englobant la consommation d'énergie réactive et la production de courants harmoniques, produisant un phénomène connu sous le nom de pollution harmonique. En effet, les convertisseurs embarqués dans des véhicules électriques peuvent être de qualité médiocre, et consommer alors une puissance réactive et déformante non négligeables. Le facteur de puissance peut ainsi être dégradé, par rapport à un seuil de dégradation prédéterminé considéré comme acceptable, et cela peut générer divers problèmes tels que la ré-injection d'harmoniques de courant électrique dans le réseau de distribution, un échauffement des câbles, des disjonctions intempestives de protections électriques, des pénalités de facturation etc.

Pour limiter la survenue d'une telle pollution harmonique ou plus généralement d'un facteur de puissance médiocre, i.e un facteur de puissance inférieur à une valeur prédéterminée, une solution connue consiste à ajouter un filtre passif LC et/ou une batterie de compensation de courant réactif en amont de chaque borne de recharge. Cette solution est coûteuse et présente un encombrement non négligeable. De plus, l'utilisation de tels filtres risque de générer des pertes, et leur mise en œuvre peut provoquer des effets de bord.

Une autre solution consiste à mettre en œuvre un filtre actif qui génère un courant réactif et/ou des courants harmoniques en opposition de phase avec les courants harmoniques consommés par chaque charge polluante. Cette solution est également coûteuse et encombrante.

Le but de l'invention est alors de proposer un système et un procédé de recharge électrique qui remédie aux inconvénients de l'état de la technique, tout en permettant d'améliorer le facteur de puissance, par exemple en réduisant la pollution harmonique du système de recharge.

A cet effet, l'invention a pour objet un procédé de recharge électrique pour véhicules électriques, mis en œuvre par un système de recharge de véhicules électriques comportant une pluralité de bornes de recharge à énergie électrique alternative, et un module de supervision, chaque borne de recharge étant configurée pour recharger un véhicule électrique connecté sur ladite borne de recharge et pour communiquer avec le module de supervision via une liaison de communication, le procédé comportant :

A) pour chaque borne de recharge, une acquisition, par un capteur de courant de ladite borne de recharge, de mesures d'un courant consommé par le véhicule électrique connecté à ladite borne de recharge, à des instants temporels successifs, et formation d'un signal numérisé de courant consommé par ladite borne, puis émission d'un message comprenant des données relatives audit signal numérisé de courant consommé vers le module de supervision.

Ce procédé comporte les étapes suivantes, mises en œuvre par le module de supervision :

- B) recevoir les messages envoyés par chaque borne de recharge, et obtenir, pour chaque borne de recharge, à partir desdites données relatives au signal numérisé de courant consommé, une représentation spectrale du courant consommé, la représentation spectrale étant calculée par application d'une transformation spectrale sur le signal numérisé de courant consommé par ladite borne de recharge, ladite représentation spectrale comportant une pluralité de couples de valeurs d'amplitude et de phase, chaque couple étant associé à un rang spectral du courant consommé,

- C) déterminer une représentation spectrale globale du système de recharge à partir des représentations spectrales du courant consommé par borne de recharge et par rang spectral,
- D) calculer une valeur de dégradation, représentative d'une dégradation du facteur de puissance du système de recharge, selon une métrique de calcul de dégradation du facteur de puissance, en fonction de ladite représentation spectrale globale du système de recharge,
- E) comparer ladite valeur de dégradation à un seuil de dégradation, et en cas de dépassement du seuil de dégradation,
- F) calculer au moins un coefficient de déclassement à appliquer par au moins une des bornes de recharge en fonction du seuil de dégradation,
- G) commander l'au moins une des bornes de recharge pour appliquer le coefficient de déclassement calculé pour modifier un paramètre d'énergie électrique fournie par ladite borne de recharge.

Avantageusement, le procédé proposé met en œuvre les capteurs de courant déjà présents dans les bornes de recharge, donc ne nécessite pas de modification structurelle des bornes de recharge, et permet une adaptation dynamique de l'énergie électrique délivrée par chaque borne de recharge pour contrôler la distorsion harmonique totale.
Suivant d'autres aspects avantageux de l'invention, le procédé de recharge électrique pour véhicules électriques comporte une ou plusieurs des caractéristiques suivantes, prises isolément ou suivant toutes les combinaisons techniquement possibles.
Le calcul d'au moins un coefficient de déclassement à appliquer par au moins une des bornes de recharge est effectué en fonction du seuil de dégradation et de ladite valeur de dégradation.
Le procédé comporte une itération des étapes A) à G) jusqu'à ce que la valeur de dégradation soit inférieure au seuil de dégradation.
La valeur de dégradation est choisie parmi une puissance réactive du système de recharge, une distorsion harmonique totale, une distorsion harmonique partielle selon un ou plusieurs rangs harmoniques prédéterminés.
Le calcul d'au moins un coefficient de déclassement met en œuvre un calcul de coefficients de déclassement de même valeur pour chaque borne de recharge.
Le calcul d'au moins un coefficient de déclassement met en œuvre un calcul de coefficients de déclassement différenciés par borne de recharge, le coefficient de déclassement étant d'autant plus pénalisant que la borne de recharge induit une quantité de dégradation du facteur de puissance élevée selon ladite métrique de calcul de dégradation du facteur de puissance.
Les étapes A) à G) sont appliquées successivement pour une pluralité de métriques de calcul de dégradation du facteur de puissance.
Les coefficients de déclassement varient entre 0 et 1, chaque coefficient de déclassement étant appliqué, par une borne de recharge, comme facteur multiplicatif d'un paramètre d'énergie électrique délivré par ladite borne de recharge.
Le procédé comporte, lorsque ladite valeur de dégradation est inférieure au seuil de dégradation, un ajustement par augmentation d'au moins un coefficient de déclassement.
Selon un autre aspect, l'invention concerne également un système de recharge électrique pour véhicules électriques comportant une pluralité de bornes de recharge à énergie électrique alternative, un module de supervision, chaque borne de recharge étant configurée pour recharger un véhicule électrique connecté sur ladite borne de recharge et pour communiquer avec le module de supervision via une liaison de communication, chaque borne de recharge comportant un capteur de courant configuré pour mesurer, à des instants temporels successifs, un courant consommé par un véhicule électrique connecté à ladite borne de recharge, et former un signal numérisé de courant consommé par ladite borne, puis émettre un message comprenant des données relatives audit signal numérisé de courant consommé vers le module de supervision.
Ce système de recharge est tel que le module de supervision est configuré pour exécuter des modules pour :

- recevoir des messages envoyés par chaque borne de recharge,
- obtenir, à partir de chaque borne de recharge, une représentation spectrale du courant consommé calculée par application d'une transformation spectrale sur le signal numérisé de courant consommé sur ladite borne de recharge, ladite représentation spectrale comportant une pluralité de couples de valeurs d'amplitude et de phase, chaque couple étant associé à un rang spectral du courant consommé,
- déterminer une représentation spectrale globale du système de recharge à partir des représentations spectrales du courant consommé par borne de recharge et par rang spectral,
- calculer une valeur de dégradation, représentative d'une dégradation du facteur de puissance du système de recharge, selon une métrique de calcul de dégradation du facteur de puissance, en fonction de ladite représentation spectrale globale du système de recharge,
- comparer ladite valeur de dégradation à un seuil de dégradation, et en cas de dépassement du seuil de dégradation,
- calculer au moins un coefficient de déclassement à appliquer par au moins une des bornes de recharge en fonction du seuil de dégradation,
- commander l'au moins une des bornes de recharge pour appliquer le coefficient de déclassement calculé pour diminuer un paramètre d'énergie électrique fournie par ladite borne de recharge.

Selon un aspect particulier, chaque borne de recharge comporte un module configuré pour appliquer la transformation spectrale pour calculer la représentation spectrale du courant consommé par ladite borne de recharge, et transmettre la représentation spectrale au module de supervision.

Selon un aspect particulier du système de recharge, chaque borne de recharge est configurée pour transmettre le signal numérisé de courant consommé au module de supervision, le module de supervision étant configuré pour appliquer la transformation spectrale sur chaque signal numérisé de courant consommé pour obtenir la représentation spectrale du courant consommé par borne de recharge.

Selon un autre aspect, l'invention concerne un module de supervision d'un système de recharge de véhicules électriques, le système de recharge de véhicules électriques comportant une pluralité de bornes de recharge à énergie électrique alternative, chaque borne de recharge étant configurée pour recharger un véhicule électrique connecté sur ladite borne de recharge et pour communiquer avec le module de supervision via une liaison de communication, chaque borne de recharge comportant un capteur de courant configuré pour mesurer, à des instants temporels successifs, un courant consommé par un véhicule électrique connecté à ladite borne de recharge, et former un signal numérisé de courant consommé par ladite borne, puis émettre un message comprenant des données relatives audit signal numérisé de courant consommé vers le module de supervision, le module de supervision étant configuré pour mettre en œuvre :

- un module de réception des messages envoyés par chaque borne de recharge,
- un module d'obtention, à partir de chaque borne de recharge, d'une représentation spectrale du courant consommé calculée par application d'une transformation spectrale sur le signal numérisé de courant consommé sur ladite borne de recharge, ladite représentation comportant une pluralité de couples de valeurs d'amplitude et de phase, chaque couple étant associé à un rang spectral du courant consommé,
- un module de détermination d'une représentation spectrale globale du système de recharge à partir des représentations spectrales du courant consommé par borne de recharge et par rang spectral,
- un module de calcul d'une valeur de dégradation, représentative d'une dégradation du facteur de puissance du système de recharge, selon une métrique de calcul de dégradation du facteur de puissance, en fonction de ladite représentation spectrale globale du système de recharge,
- un module de comparaison de ladite valeur de dégradation à un seuil de dégradation, et en cas de dépassement du seuil de dégradation,
- un module de calcul d'au moins un coefficient de déclassement à appliquer par au moins une des bornes de recharge en fonction du seuil de dégradation,
- un module de commande de l'au moins une des bornes de recharge pour appliquer le coefficient de déclassement calculé pour diminuer un paramètre d'énergie électrique fournie.

Selon un autre aspect, l'invention concerne une borne de recharge d'un système de recharge de véhicules électriques, le système de recharge de véhicules électriques comportant un module de supervision, la borne de recharge étant configurée pour recharger un véhicule électrique connecté sur ladite borne de recharge et pour communiquer avec le module de supervision via une liaison de communication, et comportant un capteur de courant configuré pour mesurer, à des instants temporels successifs, un courant consommé par un véhicule électrique connecté à ladite borne de recharge, et former un signal numérisé de courant consommé par ladite borne, puis émettre un message comprenant des données relatives audit signal numérisé de courant consommé vers le module de supervision, la borne de recharge étant en outre configurée pour recevoir dudit module de supervision une commande d'application d'un coefficient de déclassement calculé pour diminuer un paramètre d'énergie électrique fournie, et appliquer ledit coefficient de déclassement pour la fourniture d'énergie électrique audit véhicule électrique.

Selon un aspect particulier, la borne de recharge comporte un module de transformation spectrale, configuré pour réaliser ladite transformation spectrale pour calculer la représentation spectrale du courant consommé par ladite borne de recharge, la borne de recharge étant configurée pour transmettre la représentation spectrale au module de supervision.

L'invention apparaîtra plus clairement à la lecture de la description qui va suivre, donnée uniquement à titre d'exemple non limitatif, et faite en référence aux dessins dans lesquels :

la figure 1 est une représentation schématique d'un système de recharge de véhicules électriques et des véhicules électriques connectés ;

la figure 2 est un synoptique des principaux blocs fonctionnels d'une borne de recharge et du module de supervision ;

la figure 3 est un exemple de courant consommé et de représentation spectrale associée ;

la figure 4 est un logigramme des principales étapes d'un procédé de recharge de véhicules électriques selon un mode de réalisation.

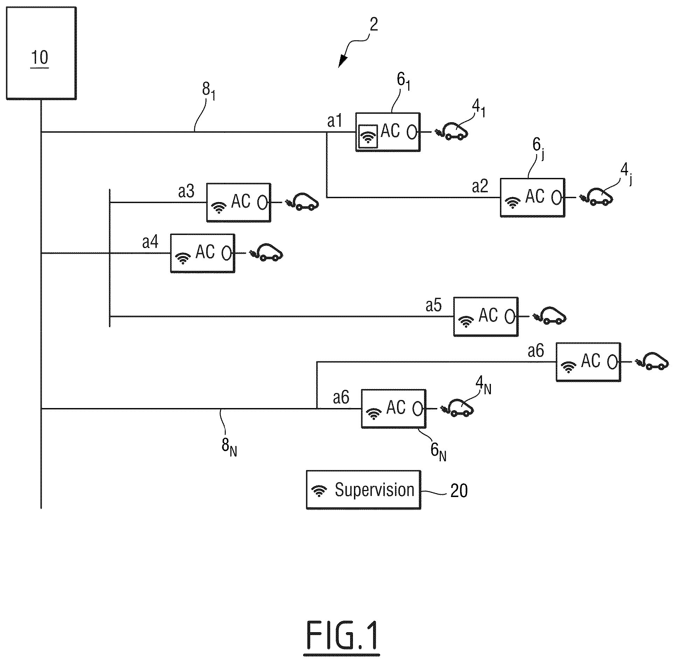

La figure 1 représente schématiquement, à titre d'exemple simplifié, un système de recharge 2 de véhicules électriques et des véhicules électriques, référencés $4_1...4_N$ sur la figure 1, connectés chacun à une borne de recharge $6_1$ à $6_N$ du système de recharge 2.

En d'autres termes, le système de recharge représenté à titre d'exemple comporte N bornes de recharge, N étant un nombre entier supérieur ou égal à 1.

De plus, bien entendu, la présence d'un véhicule électrique à chaque borne de recharge est illustrée à titre d'exemple, dans le cas où le système de recharge 2 est utilisé à sa capacité maximale. Il est clair qu'un nombre quelconque de véhicules électriques, compris entre 1 et N, peut être connecté simultanément pour effectuer une recharge de batterie à un instant t donné.

Par la suite, on considère que le nombre N désigne le nombre de bornes de recharge sollicitées pour la fourniture d'énergie électrique.

Les bornes de recharge $6_1$ à $6_N$ du système de recharge 2 sont alimentées en énergie électrique par une ou plusieurs sources d'énergie électrique 10.

Par exemple, la source d'énergie électrique 10 est un réseau de distribution d'énergie électrique alternative. Par exemple, le réseau de distribution d'énergie électrique est de type triphasé (i.e. 3 phases de courant et un neutre) et plus généralement multi-phasé.

Par exemple, chaque borne de recharge $6_1$ à $6_N$ est connectée à la source d'énergie électrique 10 par des conducteurs de courant $8_1$ à $8_N$.

Les bornes de recharge $6_1$ à $6_N$ sont des bornes de recharge à énergie électrique alternative, également appelées bornes AC, configurées pour fournir à des véhicules électriques, une énergie électrique alternative.

Chaque borne de recharge $6_j$ fournit l'énergie électrique selon un profil d'alimentation associé, le profil comprenant une valeur de courant maximale (ou valeur efficace) $I_{max\_j}$, une valeur de puissance maximale $P_{max\_j}$ et un coefficient de déclassement $\alpha_j$ à appliquer. La tension alternative fournie par chaque borne de recharge est la tension alternative fournie par la source d'énergie électrique 10, de tension efficace U.

Le coefficient de déclassement est une valeur réelle, variant entre une valeur inférieure, par exemple 0 et une valeur supérieure, par exemple 1. Le coefficient de déclassement est appliqué comme facteur multiplicatif d'un paramètre d'énergie électrique délivrée par la borne de recharge, par exemple sur la valeur de courant $I_{max\_j}$ fournie par la borne de recharge $6_j$. En d'autres termes, la consigne de courant fourni par la borne $6_j$ est alors $\alpha_j$ x $I_{max\_j}$. Ainsi, chaque borne de recharge $6_j$ est configurée pour fournir une énergie électrique dont le paramètre d'énergie électrique considéré est multiplié par le coefficient de déclassement $\alpha_j$.

Par défaut, le coefficient de déclassement $\alpha_j$ est égal à 1, en d'autres termes, la borne de recharge est configurée pour fournir l'énergie électrique maximale de valeur consigne de courant $I_{max\_j}$, qui est la valeur de courant maximale que la borne $6_j$ fournit au véhicule électrique $4_j$.

Le calcul et la mise à jour du coefficient de déclassement $\alpha_j$ associé à chaque profil d'alimentation associé à une borne de recharge sera décrit plus en détail ci-après.

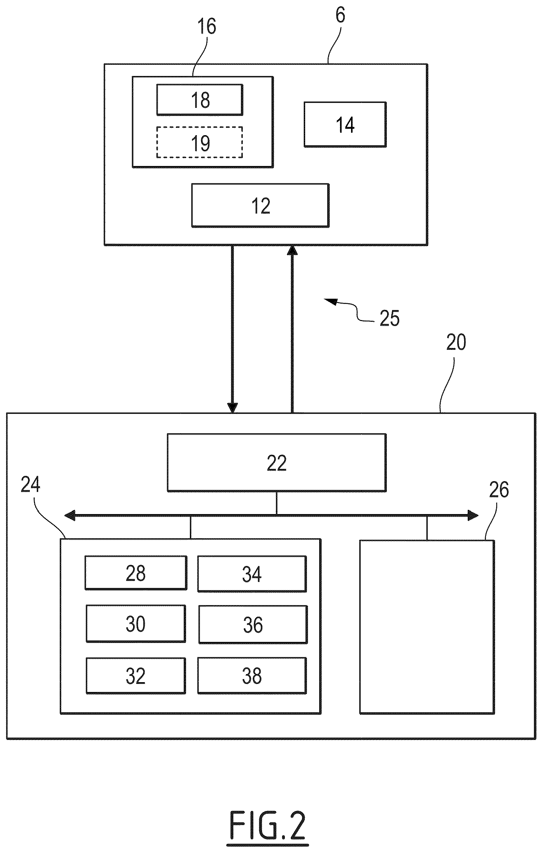

Chacune des bornes de recharge $6_1$ à $6_N$, désignée par la référence générale 6, comporte des blocs fonctionnels similaires, décrits en référence à la figure 2.

La borne de recharge 6 comporte une interface de communication désignée par la référence générale 12 (représentée dans la figure 2), configurée pour communiquer, en émission et en réception, selon un protocole de communication donné. Par exemple, l'interface de communication 12 est configurée pour communiquer selon un protocole de communication sans fil, par exemple selon le protocole 4G, 5G etc.

En variante, l'interface de communication 12 est configurée pour communiquer selon un protocole de communication filaire.

Lorsqu'un véhicule électrique $4_j$ se connecte à une borne de recharge $6_j$, via un connecteur adéquat, une fourniture d'énergie électrique alternative est mise en œuvre, pour effectuer la recharge de la batterie du véhicule électrique. Comme expliqué, le véhicule électrique comporte un convertisseur AC-DC embarqué (non représenté) qui transforme le courant électrique alternatif en courant continu pour la recharge de la batterie. Le courant électrique utilisé par le véhicule électrique est appelé par la suite courant consommé. Chaque borne de recharge $6_1$ à $6_N$ comporte un ou plusieurs capteurs de courant $14_1$ à $14_N$, désigné par la référence générale 14, configuré(s) pour mesurer le courant consommé par un véhicule électrique connecté à la borne de recharge. Le courant consommé mesuré est numérisé, cette numérisation comportant un échantillonnage à une fréquence d'échantillonnage F, la fréquence d'échantillonnage F étant avantageusement choisie en fonction de l'harmonique maximale que l'on souhaite mesurer. Une série d'échantillons de courant consommé sur une durée d'échantillonnage forme un signal numérisé de courant consommé, la durée d'échantillonnage étant au moins égale à une période du signal électrique, soit au moins égale à 20ms pour un réseau de distribution à 50Hz.

La borne de recharge 6 comporte également un contrôleur électronique 16, qui comprend un module 18 de gestion de la fourniture d'énergie électrique à un véhicule électrique connecté. En plus de fonctionnalités de gestion d'énergie électrique en fonction du type de véhicule électrique, effectuées de manière classique et non décrites plus en détail ici, le module 18 est configuré pour appliquer le coefficient de déclassement associé au profil d'alimentation fourni par la borne de recharge 6.

Optionnellement, dans un mode de réalisation, le contrôleur électronique 16 comporte un module 19 de transformation spectrale, configuré pour appliquer une transformation sur un signal numérisé de courant consommé et obtenir une représentation spectrale du courant consommé. Par exemple, le module 19 met en œuvre une transformation de Fourier, et plus particulièrement une transformation de Fourier rapide ou FFT (pour « Fast Fourier Transform »). Selon une variante, le module 19 de transformation spectrale est intégré dans le capteur de courant 14.

Dans un mode de réalisation, chacun des modules 18, 19 du contrôleur électronique 16 est réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*), un automate, un ou plusieurs processeurs, ou tout autre circuit de calcul.

Le système de recharge 2 comporte en outre un module de supervision 20, équipé d'une interface de communication 22, configurée pour communiquer avec les bornes de recharge 6.

Ainsi, dans le système de recharge 2, les bornes de recharge $6_1$ à $6_N$ sont configurées pour communiquer avec le module de supervision 20 via une liaison de communication 25, cette liaison de communication étant bi-directionnelle, selon un protocole de communication filaire ou sans fil, selon les cas de figure.

Chaque borne de recharge est configurée pour émettre vers le module de supervision 20, via la liaison de communication 25, dans un message dédié, des données relatives au signal numérisé de courant consommé par le véhicule électrique connecté à la borne de recharge.

Dans un mode de réalisation, les données relatives au signal numérisé de courant consommé sont la représentation spectrale du courant consommé obtenue par transformation spectrale du signal numérisé de courant consommé sur la borne de recharge.

Selon un mode de réalisation alternatif, les données relatives au signal numérisé de courant consommé sont les mesures successives de courant consommé formant le signal numérisé de courant consommé. Dans ce mode de réalisation, la transformation spectrale sur chaque signal numérisé de courant consommé est effectuée par le module de supervision, comme expliqué plus en détail ci-après.

Le module de supervision comporte en outre un processeur de calcul 24 et une mémoire électronique 26, configurés pour communiquer entre eux et avec l'interface de communication 22 via un bus de communication interne.

Le processeur de calcul 24 est configuré pour mettre en œuvre un module 28 d'obtention d'une représentation spectrale du courant consommé pour chaque borne de recharge, suite à une réception des messages comprenant des données relatives au signal numérisé de courant consommé sur chaque borne de recharge. Pour une borne de recharge donnée, la représentation spectrale est calculée par application d'une transformation spectrale sur le signal numérisé de courant consommé sur la borne de recharge. La représentation spectrale comporte une pluralité de couples de valeurs d'amplitude et de phase, chaque couple étant associé à un rang spectral du courant consommé. Les rangs spectraux s, pour s strictement supérieur à 1, sont également appelés rangs harmoniques, le rang spectral s=1 étant appelé rang fondamental.

Dans le cas de figure où la borne de recharge 6 comporte un module 19 de transformation spectrale, chaque borne de recharge transmet au module de supervision une représentation spectrale du courant consommé, dans un message, le module de supervision reçoit, via l'interface de communication 22, le message contenant la représentation spectrale du courant consommé et le module 28 récupère et mémorise temporairement les représentations spectrales de courant consommé reçues respectivement de chaque borne de recharge.

En variante, le module 28 est configuré pour appliquer une transformation spectrale, par exemple une transformation de Fourier rapide ou FFT. Dans cette variante, le module 28 est configuré pour récupérer, de chaque borne de recharge, le signal numérisé de courant consommé, et appliquer la transformation spectrale pour obtenir la représentation spectrale correspondante.

Le processeur de calcul 24 est configuré pour mettre en œuvre un module 30 de détermination d'une représentation spectrale globale du système de recharge à partir des représentations spectrales du courant consommé par borne de recharge et par rang spectral.

De plus, le processeur de calcul 24 est configuré pour mettre en œuvre :

- un module 32 de calcul d'au moins une valeur de dégradation, représentative d'une dégradation du facteur de puissance du système de recharge, en fonction de la représentation spectrale globale du système de recharge ;

- un module 34 de comparaison d'au moins une valeur de dégradation, représentative d'une dégradation du facteur de puissance du système de recharge, à au moins un seuil de dégradation;
- un module 36 de calcul d'au moins un coefficient de déclassement, mis en œuvre en cas de dépassement d'au moins un seuil de dégradation d'une valeur de dépassement, l'au moins un coefficient de déclassement étant à appliquer par au moins une des bornes de recharge en fonction de la valeur de dépassement, et
- un module 38 de commande de l'au moins une des bornes de recharge pour appliquer l'au moins un coefficient de déclassement calculé pour diminuer un paramètre d'énergie électrique fournie, le paramètre électrique définissant par exemple une puissance, un courant ou une tension fournis au véhicule électrique connecté à la borne.

Le module 38 est configuré pour coopérer avec l'interface de communication 22 pour la transmission d'une commande d'application, par une ou plusieurs bornes de charge $6_j$, d'un coefficient de déclassement $\alpha_j$ à appliquer. Le module $18_j$ de gestion de la fourniture d'énergie électrique de la borne $6_j$ applique le coefficient de déclassement $\alpha_j$.

Dans un mode de réalisation, les modules 28, 30, 32, 34, 36 et 38 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Dans un autre mode de réalisation, les modules 28, 30, 32, 34, 36 et 38 sont réalisés sous forme de programme logique exécutable par un ou plusieurs processeurs.

Avantageusement, le système de recharge 2 est configuré pour améliorer le facteur de puissance, sans ajout de composants matériels supplémentaires, tels que des filtres supplémentaires, grâce au procédé de recharge mis en œuvre.

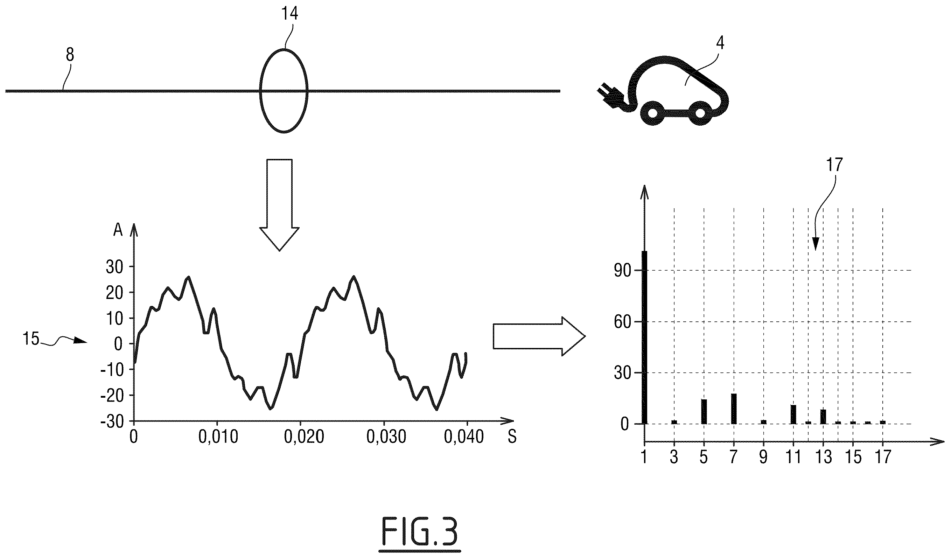

La figure 3 illustre un profil 15 de courant consommé par un véhicule électrique 4, en fonction du temps, fourni à partir des mesures de courant consommé successives fournies par le capteur de courant 14, et un graphe 17 des valeurs d'amplitudes spectrales obtenues à partir du profil 15. Le profil 15 du courant consommé est représenté par des mesures de courant instantané, en Ampères (axe des ordonnées), en fonction du temps (axe des abscisses) exprimé en secondes.

Le graphe 17 représente des valeurs d'amplitude spectrale en Ampères en ordonnée en fonction des rangs spectraux en abscisse.

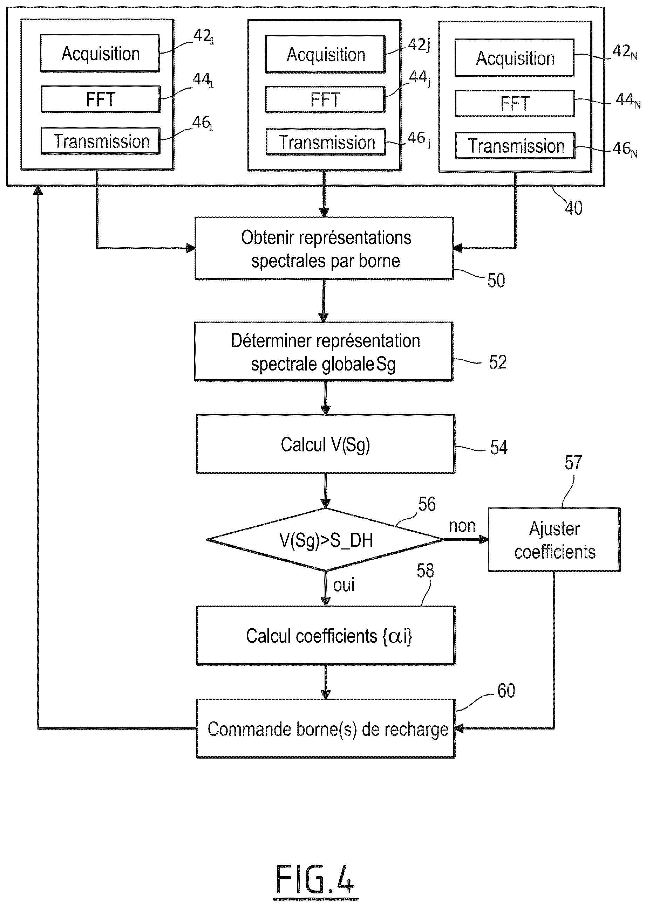

La figure 4 est un synoptique des principales étapes d'un procédé de recharge de véhicules électriques, mis en œuvre par un système de recharge de véhicules électriques tel que décrit ci-dessus, dans un mode de réalisation.

Le procédé comprend un ensemble 40 d'étapes mises en œuvre par chaque borne de recharge $6_1,.., 6_j,..., 6_N$ respective et des étapes 50 à 60 mises en œuvre par le module de supervision.

Chaque borne de recharge $6_j$, et plus particulièrement le capteur $14_j$ de la borne de recharge $6_j$, met en œuvre une étape $42_j$ d'acquisition de mesures d'intensité de courant électrique instantané consommé par un véhicule électrique connecté à la borne de recharge $6_j$, et de formation d'un signal numérisé de courant consommé.

Le signal numérisé de courant consommé est formé d'échantillons $\{I_{j1},...I_{jQ}\}$, Q étant un nombre d'échantillons prédéterminé, Q étant choisi en fonction de la fréquence d'échantillonnage F prédéterminée et de la durée d'échantillonnage choisie. La durée d'échantillonnage est avantageusement choisie supérieure ou égale à une période du signal électrique fourni par le réseau de distribution, et de préférence égale à un multiple de périodes du signal électrique fourni par le réseau de distribution, par exemple de 10 à 20 périodes. Selon des modes de réalisation, un moyennage des valeurs de courant consommé sur plusieurs périodes successives du signal électrique fourni par le réseau de distribution est appliqué.

Selon un mode de réalisation, le module de transformation spectrale 19 de chaque borne de recharge réalise une transformation spectrale à l'étape $44_j$ de transformation spectrale sur le signal numérisé de courant consommé, pour obtenir une représentation spectrale du courant consommé par le véhicule électrique connecté à la borne de recharge $6_j$.

La transformation spectrale est par exemple une transformation de Fourier discrète.

De préférence, une transformation spectrale rapide FFT (pour « Fast Fourier Transform ») est réalisée, et permet d'obtenir une représentation du courant électrique consommé appelée ci-après représentation spectrale du courant consommé, et plus simplement représentation spectrale.

Pour la borne $6_j$, la représentation spectrale $S_j=[(b_{j1},c_{j1});(b_{j2},c_{j2});...., (b_{jQ}, c_{jQ})]$ comprend des couples $(b_{jk}, c_{jk})$ de valeurs d'amplitude $b_{jk}$ et de phase $c_{jk}$, k étant le rang spectral associé.

Chaque borne de recharge 6j émet un message, via son interface de communication, vers le module de supervision, le message comprenant la représentation spectrale Sj associée à la borne de recharge 6j, ou au moins une partie correspondant aux P premiers rangs spectraux, avec P un entier par exemple égal à 25.

En effet, en pratique, il peut être considéré que seuls les P premiers rangs spectraux présentent un intérêt pour caractériser les phénomènes électriques observés.

Le module de supervision 20 met en œuvre une étape 50 d'obtention des représentations spectrales $S_1$ à $S_N$ associées à chaque borne de recharge $6_1$ à $6_N$, suite à la réception, via son interface de communication 22, des messages transmis par chaque borne de recharge.

Selon une variante, les bornes de recharge $6_1$ à $6_N$ transmettent chacune le signal numérisé de courant consommé, et le module de supervision 20 réalise une transformation spectrale pour obtenir la représentation spectrale de chaque signal numérisé de courant consommé reçu. Dit autrement, dans cette variante, l'étape 50 d'obtention des représentations spectrales $S_1$ à $S_N$ associées à chaque borne de recharge $6_1$ à $6_N$ comporte la réception de chaque borne de recharge du signal numérisé de courant consommé et l'application de la transformation spectrale. La transformation spectrale est par exemple une transformation de Fourier discrète, et de préférence une FFT.

Le module de supervision 20 met en œuvre ensuite une étape 52 de détermination d'une représentation spectrale globale Sg du système de recharge à partir des représentations spectrales par borne de recharge, pour les P rangs spectraux.

L'étape de détermination 52 met en oeuvre, pour chaque rang spectral k compris entre 1 et P, une sommation vectorielle des vecteurs définis par les couples $(b_{jk}, c_{jk})$ des représentations spectrales par borne de recharge, pour j allant de 1 à N, la sommation vectorielle permettant d'obtenir un vecteur résultant pour le rang spectral k. Les valeurs respectives d'amplitude $s_k$ et de phase $t_k$ de la représentation spectrale globale sont alors l'amplitude et la phase du vecteur résultant pour le rang spectral k.

La représentation spectrale globale Sg={$(s_1,t_1);.. (s_j,t_j);...(s_P,t_P)$), comprenant des couples $(s_i, t_i)$ de valeurs d'amplitude $s_i$ et de phase $t_i$, i étant le rang spectral associé, est obtenue à l'issue de l'étape de détermination 52.

Le procédé comprend alors une étape 54 de calcul d'une valeur représentative d'une dégradation du facteur de puissance, également appelée valeur de dégradation ci-après, V(Sg), en fonction de la représentation spectrale globale du système.

De préférence, la valeur représentative d'une dégradation du facteur de puissance V(Sg) est une ou une combinaison de :

- la puissance réactive du système de recharge, calculée à partir de $(s_1,t_1)$, $P_r$
- la distorsion harmonique totale, DHT
- une distorsion harmonique partielle, DHP$(k_1,...,k_l)$ selon un ou plusieurs rangs harmoniques (ou rangs spectraux strictement supérieurs à 1), $k_1,...,k_l$, prédéterminés.

La puissance réactive $P_r$ du système de recharge est calculée par la formule :

[MATH 1]

$$P_r = \sqrt{3} \times U \times s_1 \times \sin(t_1)$$

dans le cas où le courant est triphasé, où U est la tension efficace fournie par le système de recharge, $(s_1,t_1)$ les valeurs d'amplitude et de phase de la représentation spectrale de courant consommé de rang spectral 1.

La distorsion harmonique totale, exprimée en Ampères (A), DHT est calculée par la formule :

[MATH 2]

$$DHT = \sqrt{s_2^2 + \cdots + s_j^2 + .. + s_P^2}$$

La distorsion harmonique partielle, exprimée en Ampères, DHP$(k_1,...,k_l)$ selon un ou plusieurs rangs harmoniques $k_1,...,k_l$ prédéterminés, chaque kj étant compris entre 2 et P, est calculée par la formule :

[MATH 3]

$$DHP(k1, k2, .., kl) = \sqrt{s_{k1}^2 + \cdots + s_{kl}^2}$$

Par exemple, si l'on considère les rangs harmoniques 5 et 7, la distorsion harmonique partielle correspondante est obtenue par :

[MATH 4]

$$DHP(5,7) = \sqrt{s_5^2 + s_7^2}$$

Les formules respectives de calcul de la valeur de dégradation sont également appelées métriques de calcul de dégradation du facteur de puissance.

En d'autres termes, la valeur de dégradation est calculée selon une métrique de calcul de dégradation du facteur de puissance.

Par exemple, lorsque la valeur de dégradation considérée est la puissance réactive du système de recharge, la métrique de calcul de dégradation du facteur de puissance de formule [MATH 1] est appliquée à l'étape 54, et $V(Sg)=P_r$.

En variante, lorsque la valeur de dégradation considérée est la distorsion harmonique totale DHT, la formule [MATH 2] est appliquée à l'étape 54, et $V(Sg)=DHT$.

En variante, lorsque la valeur de dégradation considérée est une distorsion harmonique partielle $DHP(k_1,..k_l)$, la formule [MATH 3] est appliquée à l'étape 54, et $V(Sg)=DHP(k_1,..k_l)$.

Selon une autre variante, décrite de manière plus détaillée ci-après, plusieurs métriques de calcul de valeurs de dégradation du facteur de puissance sont appliquées.

La valeur de dégradation calculée à l'étape 54 est comparée à un seuil de dégradation (S_DH) correspondant à l'étape de comparaison 56.

Par exemple, lorsque la dégradation du facteur de puissance est due à la présence d'une puissance réactive, la valeur de dégradation considérée est la puissance réactive du système de recharge, le seuil de dégradation S_DH est une puissance réactive maximale autorisée Prmax, exprimée en kVAR (kilo voltampères réactifs).

Par exemple, la puissance réactive maximale autorisée est de 60kVAR pour un système dimensionné à 1000 kVA.

Lorsque la dégradation du facteur de puissance est due à la présence d'harmoniques, le seuil de dégradation S_DH est choisi comme étant égal à une valeur maximale de la distorsion harmonique totale (DHT) ou de la distorsion harmonique partielle. Cette valeur maximale peut être exprimée en Ampère (i.e. définition d'une valeur absolue maximale du courant harmonique) ou en pourcentage du courant fondamental (i.e. de rang spectral 1).

Par exemple, lorsque la valeur de dégradation considérée est la distorsion harmonique totale DHT, le seuil de dégradation S_DH correspondant est une valeur maximale de distorsion harmonique totale autorisée, par exemple égal à 20A, et plus généralement compris entre 20A et 100A pour un système dimensionné à 1000 A.

Par exemple, lorsque la valeur de dégradation considérée est la distorsion harmonique partielle DHP(k1,kl), le seuil de dégradation S_DH correspondant est une valeur maximale de distorsion harmonique partielle autorisée pour les rangs $k_1,...,k_l$ considérés, en Ampères.

Lorsque la dégradation du facteur de puissance est due à la fois à la présence d'une puissance réactive et à la présence d'harmoniques, on peut définir plusieurs seuils de dégradation similaires au seuil S_DH précédemment décrit. On peut aussi dans ce cas définir un seuil de dégradation unique englobant les deux types de dégradations, par exemple en considérant que la puissance réactive maximale autorisée Prmax correspond à un courant réactif maximal autorisé, et en définissant le seuil de dégradation en fonction du courant réactif maximal autorisé et du courant harmonique maximal autorisé. Dans un mode de réalisation, le seuil S_DH peut correspondre à la somme quadratique du courant réactif maximal autorisé et du courant harmonique maximal autorisé.

Lorsque la valeur de dégradation considérée dépasse le seuil de dégradation correspondant, l'étape de comparaison 56 est suivie d'une étape 58 de calcul d'au moins un coefficient de déclassement $\alpha_k$ à appliquer par au moins une des bornes de recharge $6_k$.

Plusieurs modes de réalisation de l'étape 58 de calcul d'au moins un coefficient de déclassement $\alpha_k$ sont envisagés.

Selon un mode de réalisation, un coefficient de déclassement de même valeur $\alpha$ est appliqué pour chacune des bornes de recharge. En d'autres termes, $\alpha_1=\alpha_2=...=\alpha_N=\alpha$ et la valeur $\alpha$ est par exemple calculée en fonction du seuil de dégradation autorisé, ainsi que de la valeur de dégradation calculée.

Selon un mode de réalisation, le ratio entre le seuil de dégradation et la valeur de dégradation est pris en considération. Par exemple, la valeur commune de coefficient de déclassement est calculée par :

[MATH 5]

$$\alpha = \frac{S\_DH}{V(Sg)}$$

Selon un autre mode de réalisation, le dépassement par rapport à ce seuil de dégradation, en d'autres termes la différence $(V(Sg) - S\_DH)$, est pris en considération.

Selon une variante, des coefficients de déclassement $\alpha_j$ différenciés sont calculés, en fonction d'une quantité effective de pollution (ou dégradation du facteur de puissance) induite par la borne de recharge $6_j$ correspondante, selon la métrique de dégradation du facteur de puissance considérée. Par exemple, un principe « pollueur payeur » est appliqué : plus la quantité effective de dégradation du facteur de puissance est induite par la borne de recharge $6_j$, plus la borne de

rechargé $6_j$ est pénalisée, donc le coefficient de déclassement $\alpha_j$ correspondant est proche de zéro, ce qui induit un fort déclassement.

A titre d'exemple, considérons 3 bornes de recharge, la métrique de calcul d'une dégradation du facteur de puissance étant dans cet exemple la puissance réactive du courant consommé.

La borne de recharge $6_1$ consomme une puissance réactive de Pr1=3kVAR, la borne de recharge $6_2$ consomme une puissance réactive de Pr2=2kVAR et la borne de recharge $6_3$ consomme une puissance réactive de Pr3=1kVAR.

La puissance réactive du système est Pr=Pr1+Pr2+Pr3=6kVAR.

Si le seuil de dégradation correspondant est de 3kVAR, le dépassement est de 3kVAR.

Pour limiter la puissance réactive globale à S_DH=3kVAR, l'égalité suivante doit être vérifiée :

[MATH 6]

$$\alpha_1 Pr1 + \alpha_2 Pr2 + \alpha_3 Pr3 = S\_DH$$

Selon le principe « pollueur - payeur », la borne de recharge $6_1$ consommant une puissance réactive supérieure aux deux autres bornes, et la borne de recharge $6_3$ consommant une puissance réactive inférieure aux deux autres bornes, on doit respecter : $\alpha_1 < \alpha_2 < \alpha_3$.

Ainsi, par exemple, on peut choisir $\alpha_1$, $\alpha_2$ et $\alpha_3$ tels que :

[MATH 7]

$$\alpha_1 = \alpha; \alpha_2 = 2\alpha; \; \alpha_3 = 3\alpha$$

En combinant ces formules [MATH 6] et [MATH 7], on obtient :

[MATH 8]

$$\alpha Pr1 + 2\alpha Pr2 + 3\alpha Pr3 = S\_DH$$

Avec les valeurs numériques données à titre d'exemple simplifié ici, on obtient finalement:

$$\alpha_1 = 3/14 \; ; \; \alpha_2 = 6/14 \text{ et } \alpha_3 = 9/14.$$

Bien entendu les calculs ci-dessus sont donnés à titre d'exemple non limitatif, d'autres formules étant bien entendu envisageables.

Selon une variante, seules les bornes de recharge les plus polluantes sont pénalisées, par exemple lorsque la quantité de pollutions induite par chacune dépassé un pourcentage du seuil de dégradation considéré.

D'autres règles de calcul d'un ou plusieurs coefficients de déclassement sont applicables, respectant de préférence le principe de pénalité plus élevée pour les bornes de recharge induisant une dégradation du facteur de puissance plus élevée.

L'étape 58 de calcul d'au moins un coefficient de déclassement $\alpha_k$ est suivie d'une étape 60 de commande d'application du ou des coefficients de déclassement par les bornes de recharge. Dit autrement, chaque borne de recharge $6_k$ va multiplier sa puissance consommée par le coefficient de déclassement $\alpha_k$ fourni par le module de supervision. Le coefficient de déclassement $\alpha_k$ est mis à jour à chaque itération de l'étape 58, et possiblement de l'étape 57 décrite ci-dessous.

Lors de l'étape 60, le ou les coefficients de déclassement sont transmis aux bornes de recharge pour application par leurs modules de gestion de la fourniture d'énergie électrique respectifs.

Si lors de l'étape de comparaison 56 la valeur de dégradation est inférieure au seuil de dégradation correspondant, alors l'étape 56 est suivie, optionnellement, d'une étape 57 d'ajustement à la hausse des coefficients de déclassement. Dit autrement, lors de l'étape 57, chaque coefficient de déclassement $\alpha_k$ peut être actualisé en augmentant sa valeur d'une valeur ou d'un pourcentage prédéterminé, ce qui permet à chaque coefficient de déclassement $\alpha_k$ de tendre vers la valeur de 1 si la dégradation du facteur de puissance devient acceptable (c'est-à-dire inférieure au seuil S_DH prédéfini).

Avantageusement, cela permet de réactualiser les valeurs des coefficients de déclassement pour tenir compte dynamiquement d'éventuels changements de situation.

Par exemple, si au moins certains des coefficients de déclassement sont strictement inférieurs à 1, ils sont augmentés d'un pourcentage d'augmentation donné, par exemple de 1%, tout en vérifiant qu'aucun des coefficients n'est supérieur à 1 après augmentation.

En d'autres termes, pour chaque coefficient de déclassement $\alpha_k$ inférieur strictement à 1, et plus généralement à la valeur supérieure de coefficient de déclassement, on applique :

[MATH 9]

$$\alpha_k = \max\left(1; 1{,}01 \times \alpha_k\right)$$

Bien entendu, le pourcentage de 1% est donné à titre d'exemple, d'autres valeurs de pourcentage étant applicables.

En variante, d'autres types d'augmentation des valeurs des coefficients de déclassement sont envisageables, par exemple une augmentation d'une valeur fixe prédéterminée.

L'étape 57 est suivie de l'étape 60 précédemment décrite.

Les étapes du procédé sont itérées à une fréquence choisie pour limiter la dégradation du facteur de puissance du système de recharge.

Avantageusement, dans un mode de réalisation, les étapes du procédé sont itérées, pour une même métrique de calcul d'une dégradation du facteur de puissance, jusqu'à ce que la valeur de dégradation selon cette métrique de dégradation du facteur de puissance soit inférieure au seuil de dégradation correspondant.

Avantageusement, selon un mode de réalisation, le procédé décrit ci-dessus est appliqué pour plusieurs métriques de calcul d'une dégradation du facteur de puissance et seuils de dégradation correspondants, successivement, selon un ordre de priorité choisi. Ainsi, l'éventuelle pollution selon plusieurs métriques de dégradation du facteur de puissance est contrôlée.

Par exemple, le procédé est appliqué d'abord, itérativement, pour une première métrique de calcul d'une dégradation du facteur de puissance, par exemple la puissance réactive du système de recharge. Ensuite, le procédé est appliqué itérativement pour une deuxième métrique de calcul d'une dégradation du facteur de puissance, par exemple la distorsion harmonique totale et ainsi de suite.

Avantageusement, il est possible de considérer successivement, comme métriques de calcul d'une dégradation du facteur de puissance, des distorsions harmoniques partielles sur plusieurs rangs harmoniques distincts.

Avantageusement, l'invention permet de réaliser une gestion des bornes de recharge du système de recharge pour véhicule électriques, optimisée pour améliorer le facteur de puissance de ce système de recharge.

**Revendications**

**1.** Procédé de recharge électrique pour véhicules électriques ($4_1...4_N$), mis en œuvre par un système de recharge (2) de véhicules électriques comportant une pluralité de bornes de recharge ($6, 6_1,...,6_N$) à énergie électrique alternative, et un module de supervision (20), chaque borne de recharge ($6_1,...,6_N$) étant configurée pour recharger un véhicule électrique ($4_1, ...,4_N$) connecté sur ladite borne de recharge et pour communiquer avec le module de supervision (20) via une liaison de communication, le procédé comportant les étapes de :

A) pour chaque borne de recharge, une acquisition ($42_1,..,42_N$), par un capteur de courant de ladite borne de recharge, de mesures d'un courant consommé par le véhicule électrique connecté à ladite borne de recharge, à des instants temporels successifs, et formation d'un signal numérisé de courant consommé par ladite borne, puis émission ($46_1,..., 46_N$) d'un message comprenant des données relatives audit signal numérisé de courant consommé vers le module de supervision (20),

le procédé étant **caractérisé en ce qu'**il comporte les étapes suivantes, mises en œuvre par le module de supervision (20):

- B) recevoir les messages envoyés par chaque borne de recharge, et obtenir (50), pour chaque borne de recharge, à partir desdites données relatives au signal numérisé de courant consommé, une représentation spectrale du courant consommé,

la représentation spectrale étant calculée par application d'une transformation spectrale sur le signal numérisé de courant consommé par ladite borne de recharge, ladite représentation spectrale comportant une pluralité de couples de valeurs d'amplitude et de phase, chaque couple étant associé à un rang spectral du courant consommé,

- C) déterminer (52) une représentation spectrale globale du système de recharge à partir des représentations spectrales du courant consommé par borne de recharge et par rang spectral,

- D) calculer (54) une valeur de dégradation (V(Sg)), représentative d'une dégradation du facteur de puissance du système de recharge, selon une métrique de calcul de dégradation du facteur de puissance, en fonction de ladite représentation spectrale globale (Sg) du système de recharge,
- E) comparer (56) ladite valeur de dégradation (V(Sg)) à un seuil de dégradation (S_DH), et en cas de dépassement du seuil de dégradation,
- F) calculer (58) au moins un coefficient de déclassement à appliquer par au moins une des bornes de recharge en fonction du seuil de dégradation,

G) - commander (60) l'au moins une des bornes de recharge pour appliquer le coefficient de déclassement calculé pour modifier un paramètre d'énergie électrique fournie par ladite borne de recharge.

2. Procédé selon la revendication 1, dans lequel le calcul (58) d'au moins un coefficient de déclassement à appliquer par au moins une des bornes de recharge est effectué en fonction du seuil de dégradation (S_DH) et de ladite valeur de dégradation (V(Sg)).

3. Procédé selon l'une quelconque des revendications 1 à 2, comportant une itération des étapes A) à G) jusqu'à ce que la valeur de dégradation (V(Sg)) soit inférieure au seuil de dégradation (S_DH).

4. Procédé selon l'une quelconque des revendications 1 à 3, dans lequel la valeur de dégradation est choisie parmi une puissance réactive du système de recharge, une distorsion harmonique totale, une distorsion harmonique partielle selon un ou plusieurs rangs harmoniques prédéterminés.

5. Procédé selon l'une quelconque des revendications 1 à 4, dans lequel le calcul (58) d'au moins un coefficient de déclassement met en œuvre un calcul de coefficients de déclassement de même valeur pour chaque borne de recharge.

6. Procédé selon l'une quelconque des revendications 1 à 4, dans lequel le calcul (58) d'au moins un coefficient de déclassement met en oeuvre un calcul de coefficients de déclassement différenciés par borne de recharge, le coefficient de déclassement étant d'autant plus pénalisant que la borne de recharge induit une quantité de dégradation du facteur de puissance élevée selon ladite métrique de calcul de dégradation du facteur de puissance.

7. Procédé selon l'une quelconque des revendications précédentes, dans lequel les étapes A) à G) sont appliquées successivement pour une pluralité de métriques de calcul de dégradation du facteur de puissance.

8. Procédé selon l'une quelconque des revendications précédentes, dans lequel les coefficients de déclassement varient entre 0 et 1, chaque coefficient de déclassement étant appliqué, par une borne de recharge, comme facteur multiplicatif d'un paramètre d'énergie électrique délivré par ladite borne de recharge.

9. Procédé selon l'une des revendications 1 à 8, comportant, lorsque ladite valeur de dégradation (V(Sg)) est inférieure au seuil de dégradation (S_DH), un ajustement (57) par augmentation d'au moins un coefficient de déclassement.

10. Système de recharge (2) de véhicules électriques comportant une pluralité de bornes de recharge (6, $6_1$,...,$6_N$) à énergie électrique alternative, un module de supervision (20), chaque borne (6, $6_1$,...,$6_N$) de recharge étant configurée pour recharger un véhicule électrique ($4_1$, ...,$4_N$) connecté sur ladite borne de recharge et pour communiquer avec le module de supervision (20) via une liaison de communication, chaque borne de recharge comportant un capteur de courant (14) configuré pour mesurer, à des instants temporels successifs, un courant consommé par un véhicule électrique connecté à ladite borne de recharge, et former un signal numérisé de courant consommé par ladite borne, puis émettre un message comprenant des données relatives audit signal numérisé de courant consommé vers le module de supervision, le système de recharge (2) étant **caractérisé en ce que** le module de supervision est configuré (20) pour exécuter des module pour:

- recevoir des messages envoyés par chaque borne de recharge,
- obtenir (28), à partir de chaque borne de recharge, une représentation spectrale du courant consommé calculée par application d'une transformation spectrale sur le signal numérisé de courant consommé sur ladite borne de recharge, ladite représentation spectrale comportant une pluralité de couples de valeurs d'amplitude et de phase, chaque couple étant associé à un rang spectral du courant consommé,
- déterminer (30) une représentation spectrale globale du système de recharge à partir des représentations spectrales du courant consommé par borne de recharge et par rang spectral,

- calculer (32) une valeur de dégradation, représentative d'une dégradation du facteur de puissance du système de recharge, selon une métrique de calcul de dégradation du facteur de puissance, en fonction de ladite représentation spectrale globale du système de recharge,

- comparer (34) ladite valeur de dégradation à un seuil de dégradation, et en cas de dépassement du seuil de dégradation,

- calculer (36) au moins un coefficient de déclassement à appliquer par au moins une des bornes de recharge en fonction du seuil de dégradation,

- commander (38) l'au moins une des bornes de recharge pour appliquer le coefficient de déclassement calculé pour diminuer un paramètre d'énergie électrique fournie par ladite borne de recharge.

**11.** Système de recharge de véhicules électriques selon la revendication 10, dans lequel chaque borne de recharge (6) comportant un module (19) configuré pour appliquer la transformation spectrale pour calculer la représentation spectrale du courant consommé par ladite borne de recharge (6), et transmettre la représentation spectrale au module de supervision (20).

**12.** Système de recharge de véhicules électriques selon la revendication 11, dans lequel chaque borne de recharge ($6_1$,...,$6_N$) est configurée pour transmettre le signal numérisé de courant consommé au module de supervision, le module de supervision (20) étant configuré pour appliquer la transformation spectrale sur chaque signal numérisé de courant consommé pour obtenir la représentation spectrale du courant consommé par borne de recharge.

**13.** Module de supervision (20) d'un système (2) de recharge de véhicules électriques ($4_1$...$4_N$), le système de recharge de véhicules électriques comportant une pluralité de bornes de recharge (6, $6_1$,...,$6_N$) à énergie électrique alternative, chaque borne (6, $6_1$,...,$6_N$) de recharge étant configurée pour recharger un véhicule électrique ($4_1$, ...,$4_N$) connecté sur ladite borne de recharge et pour communiquer avec le module de supervision (20) via une liaison de communication, chaque borne de recharge comportant un capteur de courant (14) configuré pour mesurer, à des instants temporels successifs, un courant consommé par un véhicule électrique connecté à ladite borne de recharge, et former un signal numérisé de courant consommé par ladite borne, puis émettre un message comprenant des données relatives audit signal numérisé de courant consommé vers le module de supervision, le module de supervision étant configuré pour mettre en œuvre :

- un module (22) de réception des messages envoyés par chaque borne de recharge,

- un module (28) d'obtention, à partir de chaque borne de recharge, d'une représentation spectrale du courant consommé calculée par application d'une transformation spectrale sur le signal numérisé de courant consommé sur ladite borne de recharge, ladite représentation comportant une pluralité de couples de valeurs d'amplitude et de phase, chaque couple étant associé à un rang spectral du courant consommé,

- un module (30) de détermination d'une représentation spectrale globale du système de recharge à partir des représentations spectrales du courant consommé par borne de recharge et par rang spectral,

- un module (32) de calcul d'une valeur de dégradation, représentative d'une dégradation du facteur de puissance du système de recharge, selon une métrique de calcul de dégradation du facteur de puissance, en fonction de ladite représentation spectrale globale du système de recharge,

- un module (34) de comparaison de ladite valeur de dégradation à un seuil de dégradation, et en cas de dépassement du seuil de dégradation,

- un module (36) de calcul d'au moins un coefficient de déclassement à appliquer par au moins une des bornes de recharge en fonction du seuil de dégradation,

- un module (38) de commande de l'au moins une des bornes de recharge pour appliquer le coefficient de déclassement calculé pour diminuer un paramètre d'énergie électrique fournie.

**14.** Borne de recharge d'un système de recharge de véhicules électriques conforme aux revendications 10 à 12, ledit système de recharge de véhicules électriques comportant un module de supervision (20), la borne de recharge (6) étant configurée pour recharger un véhicule électrique (4) connecté sur ladite borne de recharge et pour communiquer avec le module de supervision (20) via une liaison de communication, et comportant un capteur de courant (14) configuré pour mesurer, à des instants temporels successifs, un courant consommé par un véhicule électrique (4) connecté à ladite borne de recharge (6), et former un signal numérisé de courant consommé par ladite borne, puis émettre (12) un message comprenant des données relatives audit signal numérisé de courant consommé vers le module de supervision (20), la borne de recharge (6) étant en outre configurée pour recevoir dudit module de supervision une commande d'application d'un coefficient de déclassement calculé pour diminuer un paramètre d'énergie électrique fournie, et appliquer (18) ledit coefficient de déclassement pour la fourniture d'énergie électrique audit véhicule électrique.

**15.** Borne de recharge selon la revendication 14, comportant un module (19) de transformation spectrale, configuré pour réaliser ladite transformation spectrale pour calculer la représentation spectrale du courant consommé par ladite borne de recharge, la borne de recharge étant configurée pour transmettre la représentation spectrale au module de supervision (20).

FIG.1

FIG.2

EP 4 729 347 A1

FIG.3

FIG.4

**Europäisches Patentamt**
**European Patent Office**
**Office européen des brevets**

## RAPPORT DE RECHERCHE EUROPEENNE

Numéro de la demande

EP 25 20 9686

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 145 902 A1 (ELECTRICITE DE FRANCE [FR]; AVIGNON UNIV [FR]) 23 août 2024 (2024-08-23) * alinéa [0037] - alinéa [0166]; figures 1-7 * ----- | 1-15 | INV. B60L53/62 B60L53/63 B60L53/66 B60L53/67 |
| A | US 2016/274157 A1 (SHAH JIGAR JAYESH [US] ET AL) 22 septembre 2016 (2016-09-22) * alinéa [0019] - alinéa [0056]; figures 1-7 * ----- | 1-15 | |

DOMAINES TECHNIQUES RECHERCHES (IPC)

B60L

Le présent rapport a été établi pour toutes les revendications

| Lieu de la recherche | Date d'achèvement de la recherche | Examinateur |
|---|---|---|
| La Haye | 9 février 2026 | Altuntas, Mehmet |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.....................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 20 9686

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-02-2026

| Document brevet cité au rapport de recherche | Date de publication | Membre(s) de la famille de brevet(s) | Date de publication |
|---|---|---|---|
| FR 3145902 A1 | 23-08-2024 | FR 3145902 A1<br>WO 2024170782 A1 | 23-08-2024<br>22-08-2024 |
| US 2016274157 A1 | 22-09-2016 | CN 106096533 A<br>EP 3069924 A1<br>EP 4557568 A1<br>US 2016274157 A1 | 09-11-2016<br>21-09-2016<br>21-05-2025<br>22-09-2016 |

EPO FORM P0460

Pour tout renseignement concernant cette annexe : voir Journal Officiel de l'Office européen des brevets, No.12/82